# EUROPEAN PATENT APPLICATION

(11) **EP 4 563 388 A1**
(43) Date of publication of application: **04.06.2025**
(21) Application number: 24207320.3
(22) Date of filing: 17.10.2024
(51) Int. Cl.: B60L 1/00, B60L 53/10, B60L 53/14, B60L 58/14, B60L 58/20, B60R 16/033, B60L 1/02, B60L 1/08

(54) **POWER SOURCE APPARATUS OF VEHICLE**

(30) Priority: 28.11.2023 JP 2023200610
(71) Applicant: Suzuki Motor Corporation, Shizuoka 432-8611 (JP)
(72) Inventor: SAEKI, Hideyuki, Hamamatsu-shi 432-8611 (JP); TSUNEMI, Tatsuya, Hamamatsu-shi 432-8611 (JP)
(74) Representative: Plasseraud IP

(57) **Abstract**

[Problem to be Solved]

It is to provide a power source apparatus of a vehicle capable of increasing, during an external charging, an opportunity where an electric power of an in-vehicle battery is usable for an electric appliance, thereby improving a convenience.

[Solution]

An ECU is configured to allow a DC/AC power supply of converting an electric power of a high-voltage battery into an AC power by a DC/AC converter to thereby supply the power (step S8), if a state of charge of the high-voltage battery or a capacity of the high-voltage battery indicative of a dischargeable electric power thereof is a predetermined power supply allowance threshold or higher ("YES" at step S7). The ECU is configured to: set the predetermined power supply allowance threshold as a first threshold value (step S6), when the battery is not in an external charging ("NO" at step S4); and set the predetermined power supply allowance threshold as a second threshold value smaller than the first threshold value (step S5), when the battery is in the external charging ("YES" at step S4).

## Description

### [Technical Field]

The present invention relates to a power source apparatus of a vehicle.

### [Background Art]

Patent Literature 1 discloses a vehicle power source apparatus with an ECU to calculate an allowable power consumption up to which a high-voltage battery is able to supply an accessory electric outlet with an electric power via an inverter. In such a vehicle power source disclosed in Patent Literature 1, the ECU is configured to allow the inverter to be actuated so as to supply an electric appliance with an electric power by the calculated allowable power consumption as an upper limit, by maintaining the allowable power consumption to be a predetermined high electric power if a SOC of the high-voltage battery exceeds a predetermined value or by gradually decreasing, if the SOC drops below the predetermined value, the allowable power consumption as the SOC is lower.

### [Citation List]

### [Patent Literature]

[Patent Literature 1] JP 2004-282837 A

### [Summary of Invention]

### [Technical Problem]

However, in the vehicle power source disclosed in Patent Literature 1, since, in a case of the SOC below the predetermined value, the allowable power consumption is lowered as the SOC becomes lower, even during an external charging where an electric power from an external power source is allowed to be used, the allowable power consumption is to be set as a low value until the SOC sufficiently recovers, thereby disenabling the electric appliance to be supplied with a sufficient electric power.

An object of the present invention is to provide a power source apparatus of a vehicle capable of increasing, during an external charging, an opportunity where an electric power of an in-vehicle battery is usable for an electric appliance, thereby improving a convenience.

### [Solution to Problem]

According to an aspect of the present invention, there is provided a power source apparatus of a vehicle, including: a battery to, during a vehicle stop, be charged from an external power source outside the vehicle, the battery being configured to supply a traction motor with an electric power; a DC/AC converter to convert the electric power of the battery into an AC power; and a control unit to allow a DC/AC power supply of supplying an electric appliance with the converted AC power by the DC/AC converter, if a state of charge of the battery or a capacity of the battery is a predetermined power supply allowance threshold or higher, the capacity being indicative of a dischargeable electric power of the battery, wherein the control unit is configured to: set the predetermined power supply allowance threshold as a first threshold value, while the battery is not charged from the external power source; and set the predetermined power supply allowance threshold as a second threshold value smaller than the first threshold value, while the battery is charged from the external power source.

### [Advantageous Effect of Invention]

It is possible to increase, during an external charging, an opportunity where an electric power of an in-vehicle battery is usable for an electric appliance, thereby improving a convenience.

### [Brief Description of Drawings]

Fig. 1 is a configuration view of a vehicle mounted with a power source apparatus according to an embodiment of the present invention.
Fig. 2 is a flowchart which shows procedures of a first DC/AC power supply propriety determination process to be performed in the power source apparatus.
Fig. 3 is a flowchart which shows procedures of a second DC/AC power supply propriety determination process to be performed in the power source apparatus.
Fig. 4 is a flowchart which shows procedures of a third DC/AC power supply propriety determination process to be performed in the power source apparatus.

### [Description of Embodiment]

A power source apparatus according to the present invention is mounted on a vehicle, the power source apparatus including: a battery to, during a vehicle stop, be charged from an external power source outside the vehicle, the battery being configured to supply a traction motor with an electric power; a DC/AC converter to convert the electric power of the battery into an AC power; and a control unit to allow a DC/AC power supply of supplying an electric appliance with the converted AC power by the DC/AC converter, if a state of charge of the battery or a capacity of the battery is a predetermined power supply allowance threshold or higher, the capacity being indicative of a dischargeable electric power of the battery, wherein the control unit is configured to: set the predetermined power supply allowance threshold as a first threshold value, while the battery is not charged from the external power source; and set the predetermined power supply allowance threshold as a second threshold value smaller than the first threshold value, while the battery is charged from the external power source.

### [Embodiment]

Hereinafter, a vehicle with a power source apparatus according to an embodiment of the present invention will be described with reference to the drawings.

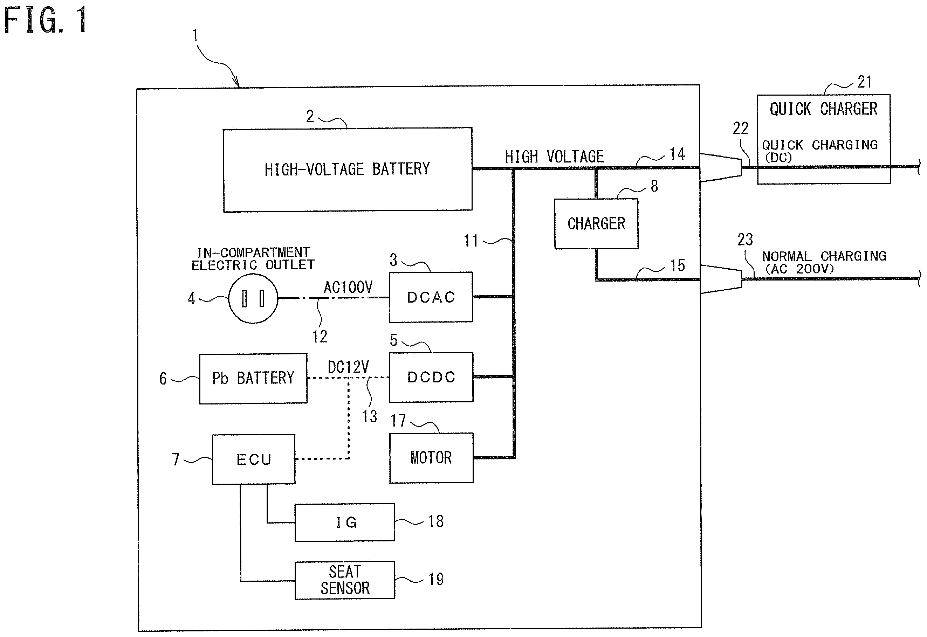

As shown in Fig. 1, a vehicle 1 includes a traction motor 17 (hereinafter referred to simply as "motor"), a high-voltage battery 2 to supply the motor 17 and the like with an electric power. The high-voltage battery 2 is mounted on the vehicle 1. The high-voltage battery 2 constitutes a battery of the present invention.

The motor 17 is connected to the high-voltage battery 2 through a high-voltage line 11. The motor 17 has a motor function of generating a driving force with an electric power supplied from the high-voltage battery 2, and a generator function of generating an electric power with a counter driving force inputted from driving wheels.

The generated electric power by the motor 17 is to be stored in the high-voltage battery 2.

The high-voltage battery 2 is of a lithium-ion battery, for example. The high-voltage battery 2 is connected with charging lines 14, 15. The high-voltage battery 2 is configured to, during a vehicle stop, be charged from an external power source outside the vehicle 1 through the charging line 14, 15. Hereinafter, such a charging from the external power source referred to also as "external charging".

The high-voltage battery 2 is to mainly supply the motor 17 with an electric power.

In the middle of the charging line 15, there is provided a charger 8. The charging line 15 is connected with a normal charging line 23 from an AC power source of the external power source.

The charger 8 is mounted on the vehicle 1. The charger 8 is configured to convert the AC supplied from the normal charging line 23 into a DC. That is, the charger 8 is used for charging the high-voltage battery 2 from the normal charging line 23 (i.e., normal charging).

The charging line 14 is connected with a quick charging line 22 from a DC power source of the external power source. The quick charging line 22 is connected with a quick charger 21. The quick charger 21 is used for charging the high-voltage battery 2 from the quick charging line 22 (i.e., quick charging).

The vehicle 1 also includes a DC/DC converter 5. The DC/DC converter 5 is connected to the high-voltage battery 2 through the high-voltage line 11. The DC/DC converter 5 is configured to step down the voltage of the high-voltage battery 2 to a predetermined voltage (e.g., DC 12V) for an accessory to thereby apply the accessory with the stepped-down voltage.

The DC/DC converter 5 is connected with a lead battery 6 (indicated as "Pb battery" in Fig. 1) and an ECU 7 (Electronic Control Unit) through a power supply line 13. The lead battery 6 is configured to output DC 12V to thereby activate, with the outputted DC 12V, an accessory system (in-vehicle device(s) to be driven with a DC power) including the ECU 7 and the like.

Thus, by the DC/DC converter 5, it is possible to convert the voltage of the high-voltage battery 2 into a predetermined one for activating the accessory system such as the ECU 7.

The ECU 7 constitutes a control unit (accessory system) of the present invention.

The vehicle 1 also includes a DC/AC converter 3. The DC/AC converter 3 is connected to the high-voltage battery 2 through the high-voltage line 11. The DC/AC converter 3 is configured to convert the electric power of the high-voltage battery 2 into an AC power (e.g., AC 100V). The DC/AC converter 3 is connected with an in-compartment electric outlet 4 through a power supply line 12.

The in-compartment electric outlet 4 is configured to supply an electric appliance (i.e., an external appliance), such as a cell phone (not shown) of an occupant within the vehicle 1, with an electric power. Due thereto, the occupant(s) within the vehicle 1 can connect the electric appliance to the in-compartment electric outlet 4 to thereby use/charge the electric appliance.

"DC/AC power supply" is of converting the electric power of the high-voltage battery 2 into an AC power via the DC/AC converter 3 and supplying the electric appliance with the converted AC power.

The ECU 7 is constituted by a computer unit including a Central Processing Unit (CPU), a Random Access Memory (RAM), a Read Only Memory (ROM), a flash memory to store a backup data and the like, and input and output ports.

The ROM of the computer unit stores a program for causing the computer unit to function as the ECU 7, in addition to various constants and maps. That is, the CPU executes the program stored in the ROM using the RAM as an operation area, causing the computer unit to function as the ECU 7.

The ECU 7 is connected with an ignition switch 18 (indicated as "IG" in Fig. 1) and a seat sensor 19. The ignition switch 18 is configured to be operated by the driver to be placed into ON/OFF position, to thereby power on/off the vehicle 1. The seat sensor 19 is configured to detect whether the occupants sit on respective seats (not shown). In other words, the seat sensor 19 is configured to detect whether there is an occupant(s) within a compartment of the vehicle 1.

The ECU 7 is configured to cause the DC/AC converter 3 to convert the electric power of the high-voltage battery 2 into the AC power to thereby supply the electric appliance with the converted AC power (i.e., the ECU 7 is able to perform the DC/AC power supply via the DC/AC converter 3).

Specifically, the ECU 7 determines whether to allow or prohibit the DC/AC power supply. For example, if a SOC (State of Charge) of the high-voltage battery 2 or a battery capacity of a dischargeable electric power (Wout) is a predetermined DC/AC power supply allowance threshold or higher, the ECU 7 allows the DC/AC power supply to be performed.

The ECU 7 is configured to:
not during the external charging (i.e., while the vehicle 1 is not connected with the external power source), set the DC/AC power supply allowance threshold as a first threshold value; and
during the external charging (i.e., while the vehicle 1 is connected with the external power source), set the DC/AC power supply allowance threshold as a second threshold value smaller than the first threshold value.

That is, the DC/AC power supply allowance threshold varies with a charging situation, and is set to be smaller during the external charging than not during the external charging.

The first threshold value is set to secure the battery capacity with which a travel performance is ensured so as to enable the vehicle 1 to travel on a highway at, if any, a legally lowest speed of e.g., 50 km/h. Due thereto, for example, when the SOC of the high-voltage battery 2 is the first threshold value or higher, a travel on the highway at the legally lowest speed or higher can be ensured.

Preferably, the first threshold value includes a margin.

The second threshold value is set to secure the battery capacity with which the DC/DC converter 5 can be activated or another battery capacity with which the electric power to be consumed at the accessory system such as the ECU 7 can be covered.

Preferably, the second threshold value includes a margin.

While the high-voltage battery 2 is in the external charging, a margin occurs at the battery capacity of the high-voltage battery 2 and thus, a function of the accessory system such as the ECU 7 is likely to be maintained. Accordingly, it is possible to cover the power consumption for the DC/AC power supply so as to enlarge a performable range within which the DC/AC power supply can be performed, thereby allowing the DC/AC power supply to be more frequently performed.

Additionally, the first threshold value is set to be larger than a value down to which a predetermined travel performance can be maintained during a vehicle travel by the motor 17.

The predetermined travel performance means that the vehicle 1 can travel at a predetermined constant speed of e.g., 100 km/h.

Thus, during the vehicle travel, since the vehicle 1 is not in the external charging, the DC/AC power supply is to be allowed, if the high-voltage battery 2 has the battery capacity or higher, down to which the predetermined travel performance can be maintained.

Note that the electric power for the DC/AC power supply and the electric power to be used for the motor 17 for driving the vehicle 1 are both supplied from the high-voltage battery 2. During the vehicle travel, it is preferable that the travel performance is prior to the DC/AC power supply. For this reason, during the vehicle travel, i.e., without the external charging, the DC/AC power supply allowance threshold is set by adding a margin to a value up to which a certain travel performance cannot be maintained (i.e., the DC/AC power supply allowance threshold is set as the sum of said value and said margin), and the DC/AC power supply is to be prohibited when the battery capacity drops below the DC/AC power supply allowance threshold, thereby distributing more electric power to the motor 17 to be driven.

The second threshold value is set to be larger than a value down to which the DC/DC converter 5 can be activated. Due thereto, when the high-voltage battery 2 is in the external charging, the DC/AC power supply is allowed as long as the high-voltage battery 2 is able to supply the DC/DC converter 5 with the electric power sufficient to activate the DC/DC converter 5.

The second threshold value may be set to be larger than a value down to which a power consumption for an electric component in addition to a power consumption for the accessory system can be covered. During the external charging, when an electric component (not shown) such an air conditioner is turned on, it is preferable that the activation for the electric component such as the air conditioner is prior to the DC/AC power supply. Specifically, the DC/AC power supply allowance threshold is set to be larger a value obtained by adding an AC driving power to a value down to which the DC/DC converter 5 can be activated (i.e., the DC/AC power supply allowance threshold is larger than the sum of said value and said AC driving power).

Such an electric component (in-vehicle device to be driven with an AC power) is not limited to the air conditioner, but may be an audio device, a car navigation device, and/or the like.

Accordingly, in a case where a total electric power to be actually consumed (the sum of power consumption for maintaining the DC/DC converter 5 to be activated, power consumption for the DC/AC power supply, and power consumption for the air conditioner) exceeds a usable electric power (electric power from the external charging and the high-voltage battery 2), an electric power (the sum of power consumption for maintaining the DC/DC converter 5 to be activated and power consumption for the air conditioner) except for the electric power for the DC/AC power supply is to be supplied to the air conditioner and the like, thereby enlarging an activatable range for the air conditioner and the like and ensuring a high air-conditioning performance even for e.g., a child for which an air conditioning is important.

During the external charging, when the occupant(s) within the compartment uses or charges the electric appliance, the DC/AC power supply allowance threshold is changed so that an activation maintainable value for the DC/DC converter 5 is added with a margin, enabling the occupant(s) to use an external electric power (e.g., electric power from the external power source, or system power) even before the SOC or the dischargeable electric power is recovered. Accordingly, it is possible to improve the convenience.

As such, such an activation maintainable value for the DC/DC converter 5, down to which the DC/DC converter 5 can be activated, is adopted for the second threshold value of the DC/AC power supply allowance threshold, minimally securing an electric power for the accessory system such as the ECU 7 to which an accessory system voltage is requested.

During the external charging using the DC power source (quick charging), the second threshold value may be set to be smaller than that during the external charging using the AC power source (i.e., the second threshold value may vary with a current type (e.g., direct current, alternate current) of the external power source). Specifically, among the external charging, there are two types of quick charging using the DC power source and normal charging using the AC power source.

In other words, at the quick charging, it is preferable that the DC/AC power supply allowance threshold is set to be smaller than that at the normal charging. This is because, at the quick charging, the SOC of the high-voltage battery 2 is recovered relatively-early. Thus, at the quick charging, the margin amount for the DC/AC power supply allowance threshold, to be added to the activation maintainable value for the DC/DC converter 5, can be reduced.

Furthermore, at the quick charging with a larger power supply amount than at the normal charging, a margin for the battery capacity is likely to occur at the high-voltage battery 2 and hence, a function of the ECU 7 and the like is likely to be maintained. For this reason, it is possible to cover the power consumption for the DC/AC power supply so as to enlarge the performable range for the DC/AC power supply, thereby increasing an opportunity for the DC/AC power supply.

As mentioned above, during the quick charging, the power supply amount from the power source outside the vehicle 1 becomes larger than that during the normal charging.

The margin amount for the DC/AC power supply allowance threshold is set so as to enable the DC/DC converter 5 to be maintained in an activation state even when an external supply power during the external charging, with which the high-voltage battery 2 is charged from the external power source, instantaneously drops below the power consumption for the DC/AC power supply. Accordingly, at the quick charging with the larger power supply amount from the external power source, a smaller margin amount for the DC/AC power supply allowance threshold can be set, enabling the DC/AC power supply to be started at an earlier timing (i.e., more frequently performing the DC/AC power supply) to thereby improve the convenience.

By the way, if there are no occupants within the compartment, even during the external charging, the DC/AC power supply is unnecessary to be preferentially performed, leading to a low priority for using the electric appliance via the DC/AC power supply.

For this reason, without the occupants within the vehicle 1, the ECU 7 may set the second threshold value to be the same as the first threshold value. In other words, during the external charging, the ECU 7 may adopt the second threshold value different from the first threshold value, as long as there is an occupant(s) within the vehicle 1.

Specifically, if determines that there are no occupants within the vehicle 1, following the ignition switch 18 or the seat sensor 19 in OFF-state, the ECU 7 sets, even during the external charging, the same DC/AC power supply allowance threshold as during the vehicle travel (not during the external charging).

Thus, the DC/AC power supply is prohibited from being performed until the SOC of the high-voltage battery 2 recovers to a travel maintainable battery capacity, prioritizing the charging for the high-voltage battery 2 to thereby early complete the charging.

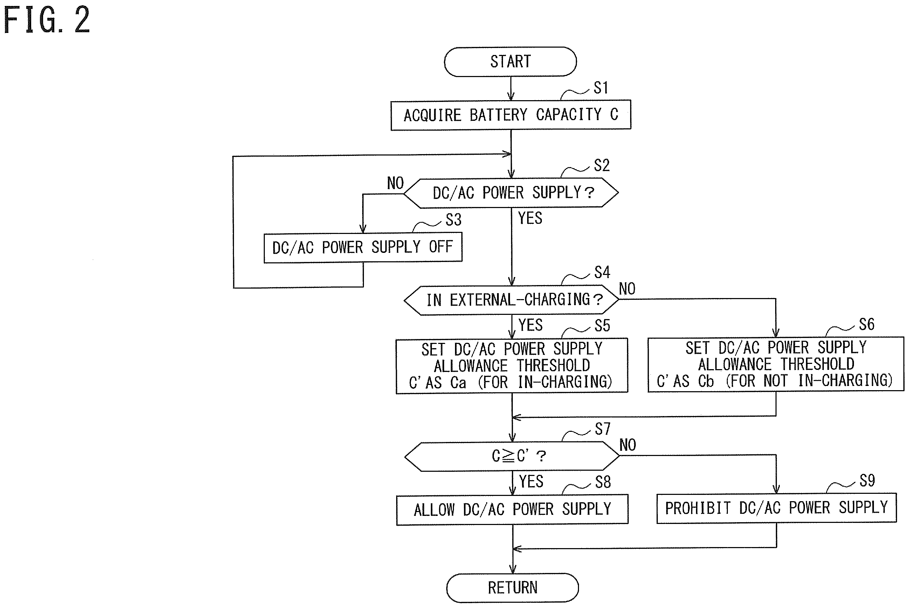

Next, referring to Fig. 2, procedures of a first DC/AC power supply propriety determination process will be described. In the first DC/AC power supply propriety determination process, the DC/AC power supply allowance threshold depends on whether the high-voltage battery 2 is in the external charging.

The first DC/AC power supply propriety determination process is repeatedly performed by the ECU 7, at a predetermined interval.

The ECU 7 acquires a battery capacity C of the high-voltage battery 2 (or the SOC (%) of the high-voltage battery 2) (step S 1).

The ECU 7 determines whether the DC/AC power supply is required (step S2). For example, the ECU 7 determines that the DC/AC power supply is required, when the in-compartment electric outlet 4 is connected with the electric appliance.

If determines that the DC/AC power supply is not required ("NO" at step S2), the ECU 7 turns off the DC/AC power supply (e.g., turns off the DC/AC converter 3) (step S3) and thereafter, proceeds to step S2 again (i.e., the ECU 7 returns to step S2 without the DC/AC power supply).

If determines that the DC/AC power supply is required ("YES" at step S2), the ECU 7 determines whether the vehicle 1 is in the external charging (step S4).

If determines that the vehicle 1 is in the external charging ("YES" at step S4), the ECU 7 sets the DC/AC power supply allowance threshold C' as "Ca" (step S5). "Ca" (indicated as "for in-charging" in Fig. 2) is a threshold value to be used for the external charging.

If determines that the vehicle 1 is not in the external charging ("NO" at step S4), the ECU 7 sets the DC/AC power supply allowance threshold C' as "Cb" (step S6). "Cb" (indicated as "for not in-charging" in Fig. 2) is a threshold value to be used for non external-charging.

The respective values are set, so that "Ca" is smaller than "Cb" (Ca < Cb).

"Cb" corresponds to the first threshold value, and "Ca" corresponds to the second threshold value.

After step S5, S6, the ECU 7 determines whether or not the acquired battery capacity C at step S1 is the set DC/AC power supply allowance threshold C' or higher (step S7).

If determines that the acquired battery capacity C is the set DC/AC power supply allowance threshold C' or higher ("YES" at step S7), the ECU 7 allows the DC/AC power supply to be performed (e.g., maintains the DC/AC converter 3 to be in ON-state to thereby start the DC/AC power supply) (step S8), thereafter terminating this process.

If determines that the acquired battery capacity C is lower than the set DC/AC power supply allowance threshold C' ("NO" at step S7), the ECU 7 prohibits the DC/AC power supply from being performed (e.g., turns off the DC/AC converter 3 to thereby electrically disconnect the in-compartment electric outlet 4 therefrom) (step S9), thereafter terminating this process.

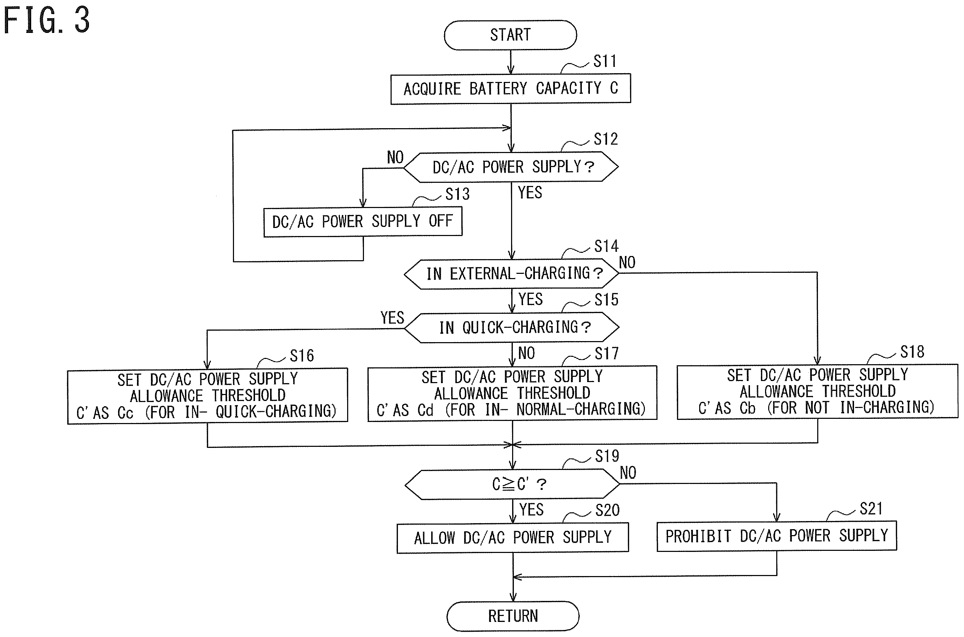

Next, referring to Fig. 3, procedures of a second DC/AC power supply propriety determination process as a first modification will be described. The second DC/AC power supply propriety determination process is different from the first DC/AC power supply propriety determination process, in that, during the external charging for the high-voltage battery 2, the second threshold value varies with charging types of the normal charging and the quick charging.

The second DC/AC power supply propriety determination process is repeatedly performed by the ECU 7, at a predetermined interval.

Note that such a second DC/AC power supply propriety determination process may be performed instead of the above-mentioned first DC/AC power supply propriety determination process.

The ECU 7 acquires the battery capacity C of the high-voltage battery 2 (step S11).

The ECU 7 determines whether the DC/AC power supply is required (step S12).

If determines that the DC/AC power supply is not required ("NO" at step S12), the ECU 7 turns off the DC/AC power supply (step S13) and thereafter, proceeds to step S12 again.

If determines that the DC/AC power supply is required ("YES" at step S12), the ECU 7 determines whether the vehicle 1 is in the external charging (step S14).

If determines that the vehicle 1 is in the external charging ("YES" at step S14), the ECU 7 determines whether the external charging is the quick charging (step S15).

If determines that the external charging is the quick charging ("YES" at step S15), the ECU 7 sets the DC/AC power supply allowance threshold C' as "Cc" (step S16). "Cc" is a threshold value to be used for the quick charging as the external charging.

If determines that the external charging is not the quick charging ("NO" at step S15), the ECU 7 sets the DC/AC power supply allowance threshold C' as "Cd" (step S17). "Cd" is a threshold value to be used for the normal charging as the external charging.

The respective values are set, so that "Cc" is smaller than "Cd" (Cc < Cd).

If determines that the vehicle 1 is not in the external charging ("NO" at step S14), the ECU 7 sets the DC/AC power supply allowance threshold C' as "Cb" (step S18). "Cb" (indicated as "for not in-charging" in Fig. 3) is a threshold value to be used for non external-charging.

The respective values are set, so that "Cc", "Cd" is smaller than "Cb". "Cb" corresponds to the first threshold value, and "Cc", "Cd" corresponds to the second threshold value.

After step S16, S17, S18, the ECU 7 determines whether or not the acquired battery capacity C at step S 11 is the set DC/AC power supply allowance threshold C' or higher (step S19).

If determines that the acquired battery capacity C is the set DC/AC power supply allowance threshold C' or higher ("YES" at step S19), the ECU 7 allows the DC/AC power supply to be performed (step S20), thereafter terminating this process.

If determines that the acquired battery capacity C is lower than the set DC/AC power supply allowance threshold C' ("NO" at step S19), the ECU 7 prohibits the DC/AC power supply from being performed (step S21), thereafter terminating this process.

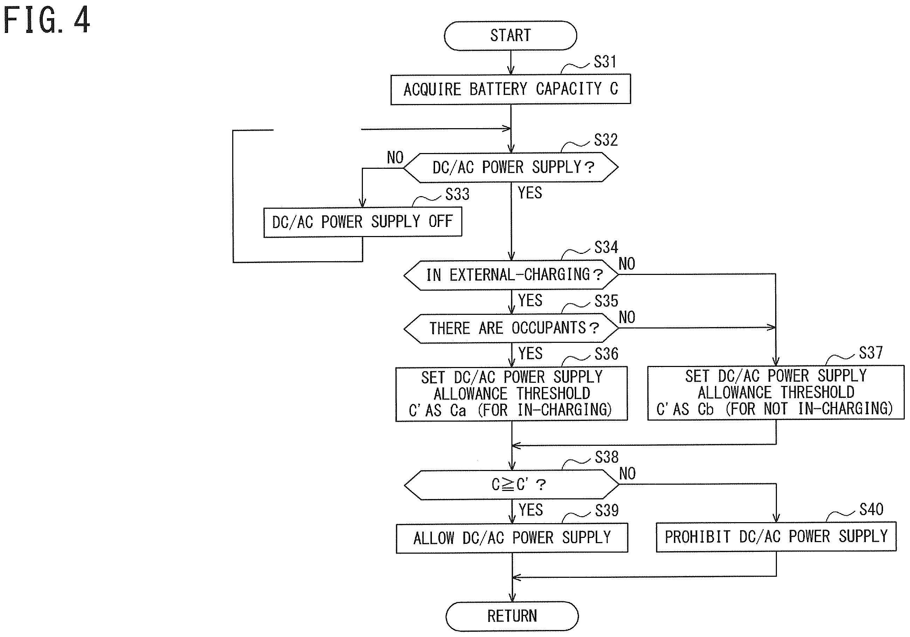

Next, referring to Fig. 4, procedures of a third DC/AC power supply propriety determination process as a second modification will be described. The third DC/AC power supply propriety determination process is different from the first DC/AC power supply propriety determination process, in that, the DC/AC power supply allowance threshold depends on not only whether the vehicle 1 is in the external charging but also whether there is an occupant(s) within the vehicle 1.

The third DC/AC power supply propriety determination process is repeatedly performed by the ECU 7, at a predetermined interval.

Note that such a third DC/AC power supply propriety determination process may be performed instead of the above-mentioned first DC/AC power supply propriety determination process.

The ECU 7 acquires the battery capacity C of the high-voltage battery 2 (step S31).

The ECU 7 determines whether the DC/AC power supply is required (step S32).

If determines that the DC/AC power supply is not required ("NO" at step S32), the ECU 7 turns off the DC/AC power supply (step S33) and thereafter, proceeds to step S32 again.

If determines that the DC/AC power supply is required ("YES" at step S32), the ECU 7 determines whether the vehicle 1 is in the external charging (step S34).

If determines that the vehicle 1 is in the external charging ("YES" at step S34), the ECU 7 determines whether there is an occupant(s) within the vehicle 1 (step S35).

If determines that there is an occupant(s) within the vehicle 1 ("YES" at step S35), the ECU 7 sets the DC/AC power supply allowance threshold C' as "Ca" (step S36). "Ca" (indicated as "for in-charging" in Fig. 4) is a threshold value to be used for the external charging.

If determines that there are no occupants within the vehicle 1 ("NO" at step S35), the ECU 7 sets the DC/AC power supply allowance threshold C' as "Cb" (step S37). "Cb" (indicated as "for not in-charging" in Fig. 4) is a threshold value to be used for non external-charging.

The respective values are set, so that "Ca" is smaller than "Cb" (Ca < Cb). "Cb" corresponds to the first threshold value, and "Ca" corresponds to the second threshold value.

After step S36, S37, the ECU 7 determines whether or not the acquired battery capacity C at step S31 is the set DC/AC power supply allowance threshold C' or higher (step S38).

If determines that the acquired battery capacity C is the set DC/AC power supply allowance threshold C' or higher ("YES" at step S38), the ECU 7 allows the DC/AC power supply to be performed (step S39), thereafter terminating this process.

If determines that the acquired battery capacity C is lower than the set DC/AC power supply allowance threshold C' ("NO" at step S38), the ECU 7 prohibits the DC/AC power supply from being performed (step S40), thereafter terminating this process.

As such, in the power source apparatus according to the embodiment, the ECU 7 is configured to allow the DC/AC power supply of converting, by the DC/AC converter 3, an electric power (DC power) of the high-voltage battery 2 into an AC power and supplying the converted AC power, if the SOC of the high-voltage battery 2 or the battery capacity of the high-voltage battery 2 indicative of the dischargeable electric power thereof is the predetermined power supply allowance threshold or higher.

Then, the ECU 7:
sets the power supply allowance threshold as the first threshold value, when the high-voltage battery 2 is not in the external charging; and
sets the power supply allowance threshold as the second threshold value smaller than the first threshold value, when the high-voltage battery 2 is in the external charging.

Due thereto, during the external charging for the high-voltage battery 2, the DC/AC power supply allowance threshold for the DC/AC power supply is set to be smaller than that not during the external charging. As a result, it is possible to increase, during the external charging, an opportunity where an electric power of the high-voltage battery 2 as an in-vehicle battery is usable for the electric appliance, thereby improving a convenience.

Additionally, in the power source apparatus according to the embodiment, the first threshold value is larger than a travel performance maintainable value down to which a predetermined travel performance can be maintained at a vehicle travel using the motor 17.

Due thereto, not during the external charging, e.g., during the vehicle travel, it is possible to avoid the battery capacity of the high-voltage battery 2 from dropping, due to the DC/AC power supply for the electric appliance, into an unmaintainable state where the predetermined travel performance is impossible to be maintained (i.e., it is possible to avoid a power deficiency).

Additionally, the power source apparatus according to the embodiment includes the DC/DC converter 5 to step down the voltage of the high-voltage battery 2 to the predetermined voltage for the accessory system to thereby supply the accessory system with the power.

The second threshold value is set to be larger than an activation maintainable value for the DC/DC converter 5, down to which the DC/DC converter 5 can be activated.

Due thereto, during the external charging for the high-voltage battery 2, it is possible to perform the DC/AC power supply for the electric appliance while maintaining the DC/DC converter 5 to be activated.

Additionally, in the power source apparatus according to the embodiment, the second threshold value may be set to be larger than a value down to which a power consumption for an in-use electric component also can be covered.

Due thereto, during the external charging for the high-voltage battery 2, it is possible to perform the DC/AC power supply for the electric appliance while maintaining the accessory system, such as the ECU 7, and the electric component to be activated.

Additionally, in the power source apparatus according to the embodiment, the high-voltage battery 2 is configured to be charged from the DC power source or the AC power source outside the vehicle 1.

Then, the second threshold value to be set at the external charging using the DC power source may be smaller than that at the external charging using the AC power source.

Specifically, at the external charging using the DC power source (i.e., quick charging), an electric power supply amount from the external power source can be larger than that at the external charging using the AC power source (i.e., normal charging), due to a larger AC/DC conversion circuit and the like installed outside the vehicle 1. A margin amount is set to secure the SOC of the high-voltage battery 2 maintainable for activating the DC/DC converter 5 even when an electric power supplied from the outside instantaneously drops below an in-vehicle power supply (i.e., an amount of power supply from the high-voltage battery 2 to the electric appliance connected to the in-compartment electric outlet 4).

Thus, at the quick charging with a larger power supply amount from the external power source, such a margin amount can be reduced, allowing the second threshold value to be smaller than that at the normal charging. That is, during the external charging using the DC power source, immediately after e.g., the SOC of the high-voltage battery 2 reaches the smaller second threshold value, the DC/AC power supply is allowed to be started, thereby properly increasing, in accordance with a power supply amount from the external power source, an opportunity where an electric power of the high-voltage battery 2 as an in-vehicle battery is usable for the electric appliance.

Additionally, in the power source apparatus according to the embodiment, while there are no occupants within the vehicle 1, the ECU 7 sets, even during the external charging, the second threshold value to be the same as the first threshold value. In other words, during the external charging, as long as there is an occupant(s) within the vehicle 1, the second threshold value different from the first threshold value is adopted.

Note that the ECU 7 may determine whether the seat sensor 19 detects the seated occupant(s), and set the second threshold value different from the first threshold value when determining, during the external charging, that the seat sensor 19 detects the seated occupant(s).

Due thereto, in a case of no occupants within the vehicle 1, since a priority for using the electric appliance via the DC/AC power supply becomes low, the second threshold value is enlarged to be the same as the first threshold value.

That is, while there are no occupants within the vehicle 1 during the external charging, even if the in-compartment electric outlet 4 is connected with the electric appliance, the electric appliance is more difficult to be supplied with the electric power from the high-voltage battery 2, thereby charging the high-voltage battery 2 more quickly.

Although the embodiment of the present invention has been disclosed, it will be apparent to those skilled in the art that changes may be made without departing from the scope of the present invention. It is intended to cover in the appended claims all such modifications and equivalents.

### [Reference Signs List]

1: vehicle
2: high-voltage battery (battery)
3: DC/AC converter
5: DC/DC converter
7: ECU (control unit, accessory system)
17: traction motor

## Claims

1. A power source apparatus of a vehicle (1), comprising:
a battery (2) to, during a vehicle stop, be charged from an external power source outside the vehicle, the battery being configured to supply a traction motor (17) with an electric power;
a DC/AC converter (3) to convert the electric power of the battery into an AC power; and
a control unit (7) to allow a DC/AC power supply of supplying an electric appliance with the converted AC power by the DC/AC converter, if a state of charge of the battery or a capacity of the battery is a predetermined power supply allowance threshold or higher, the capacity being indicative of a dischargeable electric power of the battery, wherein
the control unit is configured to:
set the predetermined power supply allowance threshold as a first threshold value, while the battery is not charged from the external power source; and
set the predetermined power supply allowance threshold as a second threshold value smaller than the first threshold value, while the battery is charged from the external power source.

2. The power source apparatus as claimed in claim 1, wherein
the first threshold value is larger than a value down to which a predetermined travel performance can be maintained at a travel using the traction motor.

3. The power source apparatus as claimed in claim 1 or 2, comprising
a DC/DC converter (5) to step down a voltage of the battery to a predetermined voltage for an accessory system including the control unit, to thereby apply the accessory system with the stepped-down voltage, wherein
the second threshold value is larger than a value down to which the DC/DC converter can be activated.

4. The power source apparatus as claimed in claim 3, wherein
the second threshold value is larger than a value down to which a power consumption for an electric component also can be covered.

5. The power source apparatus as claimed in claim 1, wherein
the battery is configured to be charged from a DC power source/AC power source of the external power source, and
during the charging from the DC power source, the second threshold value is set to be smaller than that during the charging from the AC power source.

6. The power source apparatus as claimed in claim 1, wherein
while the battery is charged from the external power source, as long as there is an occupant within the vehicle, the control unit sets the predetermined power supply allowance threshold as the second threshold value smaller than the first threshold value.
